# EUROPÄISCHE PATENTSCHRIFT

(11) **EP 1 859 921 B1**
(45) Veröffentlichungstag und Bekanntmachung des Hinweises auf die Patenterteilung: **17.06.2009**
(21) Anmeldenummer: 07007276.4
(22) Anmeldetag: 07.04.2007
(51) Int. Cl.: B29C 70/86, B29K 505/00, B29K 505/10, B29K 505/14, B29K 307/04

(54) **Mit einem Metallkomponent verbundete Faserverbundbauteil**
Fibre composite component joined with a metal part
Elément composite fibreux lié à une pièce métallique

(30) Priorität: 26.05.2006 DE 102006024604
(43) Veröffentlichungstag der Anmeldung: 28.11.2007
(73) Patentinhaber: Bayerische Motoren Werke Aktiengesellschaft, 80809 München (DE)
(72) Erfinder: Danzer, Martin, 93309 Kelheim (DE); Wattendorf, Udo, 84172 Buch am Erlbach (DE); Schnaufer, Thomas, 84171 Baierbach (DE)

(56) Entgegenhaltungen:
- EP-A- 1 600 469
- US-A- 5 137 781

## Beschreibung

Die Erfindung bezieht sich auf ein Faserverbundbauteil mit einer in einer Kunststoffmatrix eingebetteten, hitzebeständigen, insbesondere aus Carbonfasern bestehenden Faserstruktur und zumindest einer mit dem Faserverbundmaterial integral verbundenen Metallkomponente, nach dem Oberbegriff des Patentanspruchs 1.

Es ist z. B. aus der DE 198 34 772 A1 bekannt, Metall- und faserverstärkte Kunststoffteile dadurch zusammenzufügen, dass die Metallteile vor dem Konsolidierungsprozess des Faserverbundmaterials in den Faserlagenaufbau eingelegt und/oder mit diesem vernäht werden, so dass sie einen integralen Bestandteil des fertigen Bauteils bilden. Eine derartige Fügemethode ist fertigungstechnisch aufwändig und nicht serientauglich. Wahlweise wird das fertige Faserverbundbauteil mit der Metallkomponente verklebt, was jedoch relativ lange Taktzeiten und zusätzlich eine gegenseitige Fixierung der Bauteile zumindest bis zum Aushärten der Klebstoffverbindung erfordert.

Nach einem weiteren, aus der DE 34 30 440 A1 bekannten Fügeverfahren wird das Kunststoff- mit dem Metallteil vernietet, verschraubt oder mit einem U-förmigen Randprofil punktverschweißt. Damit aber kommt es zu einer Zerstörung der Verstärkungsfasern und zu hohen Lochleibungskräften an den punktförmigen Verbindungsstellen und somit zu einer deutlichen Beeinträchtigung der mechanischen Bauteileigenschaften.

Das Dokument US 5,137,781 A1 offenbart einen mit Metallmatrix getränkten Faserverbundbauteil.

Demgegenüber ist es Aufgabe der Erfindung, das Faserverbundbauteil der eingangs genannten Art so auszubilden, dass unter Beibehalt der mechanischen Eigenschaften des Kunststoff-Faserverbunds eine qualitativ hochwertige Anbindung der Metallkomponente auf fertigungstechnisch einfache, seriengerechte Weise erreicht wird.

Diese Aufgabe wird erfindungsgemäß durch ein Faserverbundbauteil mit den Merkmalen des Patentanspruchs 1 gelöst.

Aufgrund der Anbindung der Metallkomponente zeit- und stoffgleich mit der metallischen Durchtränkung der Faserlagen wird mit dem erfindungsgemäßen Faserverbundbauteil ein hochgradig lastfester Übergang zwischen Faserverbundmaterial und Metallkomponente ohne örtliche Überspannungen und ohne Störung der Faserstruktur erzielt und zusätzlich eine einfache Serienfertigung mit geringen Taktzeiten ermöglicht, mit dem weiteren Effekt, dass die Faserstruktur örtlich begrenzt, nämlich vorzugsweise nur im Anbindungsbereich der Metallkomponente, mit der Metallmatrix getränkt, ansonsten aber in eine Kunststoffmatrix eingebettet ist, so dass die mechanischen Eigenschaften eines Kunststoff-Faserverbunds weitgehend erhalten bleiben.

Um das Faserverbundbauteil auf fertigungstechnisch einfache und zeitsparende Weise mit weiteren Bauteilen zu verbinden, wird es vorzugsweise an der Metallkomponente mit diesen verlötet oder verschweißt.

In weiterer, vorteilhafter Ausgestaltung der Erfindung wird die Metallkomponente getrennt vorgefertigt und beim Erstarren der Metallmatrix stoffschlüssig mit dieser verbunden, was sich vor allem dann empfiehlt, wenn für die Metallkomponente ein hochlegierter Stahl oder ein anderes, schmelzfestes Metall gewählt wird. Andererseits ist es im Hinblick auf eine weitere fertigungstechnische Vereinfachung und eine grenzflächenfreie Bindung zwischen Metallkomponente und Faserverbundstruktur aber auch moglich, die Metallkomponente gleichzeitig mit dem Durchtränken der Faserlagen aus dem gleichen metallischen Material wie die metallische Matrixzone herzustellen.

Die Metallmatrix besteht vorzugsweise aus einem kupfer- oder silberbasierten Flüssiglot, welches an der Grenzfläche zu den Verstärkungsfasern eine chemische Verbindung, also bei Carbonfasern eine kohlenstoffhaltige Legierung, bildet und sich bei Verwendung einer vorgefertigten Metallkomponente auch mit dieser chemisch etwa in Form einer ferrithaltigen Legierung verbindet.

Die Erfindung wird nunmehr beispielsweise anhand der Zeichnungen näher erläutert. Es zeigen in stark schematisierter Darstellung:
- **Fig. 1**: zwei miteinander verschweißte Faserverbundbauteile nach der Erfindung im Schnitt;
- **Fig. 2**: eine der Fig. 1 entsprechende Darstellung eines weiteren Ausführungsbeispiels der Erfindung;
- **Fig.3**: ein Formwerkzeug zur Herstellung eines Faserverbundbauteils mit einstückig an die Metallmatrix angegossener Metallkomponente; und
- **Fig. 4**: ein Formwerkzeug zur Herstellung eines gegenüber Fig. 3 modifizierten Faserverbundbauteils.

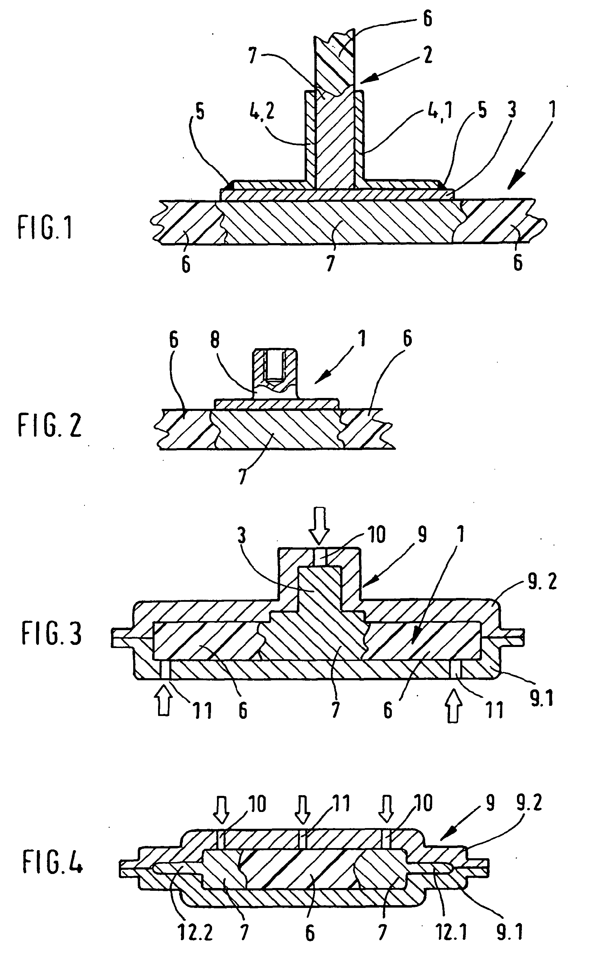

Die in Fig. 1 gezeigten Faserverbundbauteile 1, 2 sind jeweils mit einer durch Endlos-Carbonfaserlagen verstärkten, duroplastischen Kunststoffmatrix versehen und einschließlich der integral angefügten, platten- bzw. winkelförmigen Metallkomponenten 3 bzw. 4.1 und 4.2 zunächst getrennt voneinander im Wege des Injektionsverfahrens hergestellt und dann über randseitige Schweißnähte 5 an den Metallkomponenten 3, 4.1, 4.2 miteinander verbunden.

Die Anbindung der Metallkomponenten 3 bzw. 4.1, 4.2 an die Faserverbundstruktur ist in den Herstellungsprozess der Faserverbundbauteile 1 bzw. 2 in der Weise integriert, dass die Endlos-Carbonfaserlagen in zunächst noch trockenem Zustand gemeinsam mit der vorgefertigten Metallplatte 3 bzw. den Winkelstücken 4.1, 4.2 in ein entsprechendes Formwerkzeug eingelegt werden und anschließend der Faserlagenaufbau mit der Kunststoff-, etwa einer Epoxidmatrix 6 getränkt wird, im Anlagebereich der Metallplatte 3 (bzw. der Winkelstücke 4.1, 4.2) in einer örtlich begrenzten, in der Figur durch eine Schrägschraffur angedeuteten Matrixzone 7 jedoch anstatt mit der Kunststoffmatrix 6 mit einem kupfer- oder silberbasierten Flüssiglot, welches einerseits mit der angrenzenden Metallplatte 3 (bzw. den Winkelstücken 4.1, 4.2) und andererseits mit den Randzonen der Carbonfasern eine chemische Verbindung eingeht, so dass die Metallteile 3 (und 4.1, 4.2) nach der Konsolidierung der kombinierten Kunststoff-/Metallmatrix 6, 7 jeweils einen integralen Bestandteil der Faserverbundstruktur 1 (bzw. 2) bilden.

Bei dem in Fig. 2 gezeigten Carbonfaser-Verbundbauteil 1, bei dem die dem ersten Ausführungsbeispiel entsprechenden Komponenten durch das gleiche Bezugszeichen gekennzeichnet sind, ist anstelle einer Metallplatte ein Gewindeelement 8 auf die gleiche Weise wie bei dem Faserverbundbauteil nach Fig. 1 über eine örtlich begrenzte metallische Matrixzone 7 integral mit der Faserverbundstruktur verbunden. Der Hauptanteil der Carbonfaserlagen hingegen ist unverändert in eine Kunststoffmatrix 6 eingebettet, so dass die mechanischen Eigenschaften des Faserverbundbauteils 1 durch die metallische Matrixzone 7 nur unwesentlich beeinflusst werden.

Fig. 3, wo die den Fign. 1 und 2 entsprechenden Komponenten wiederum mit dem gleichen Bezugszeichen gekennzeichnet sind, zeigt ein weiteres Ausführungsbeispiel eines erfindungsgemäß gestalteten, durchgehend über beide Matrixzonen 6, 7 carbonfaserverstärkten Verbundbauteils 1, zusammen mit dem zugehörigen, aus einer unteren und einer oberen Formhälfte 9.1 und 9.2 bestehenden Formwerkzeug 9. In diesem Fall wird die Metallkomponente 3 jedoch nicht getrennt von dem Faserverbundbauteil 1 vorgefertigt, sondern gleichzeitig mit der metallischen Matrixzone 7 über eine entsprechende Metallmatrix-Angussöffnung 10 im Formwerkzeug 9 vergossen, so dass die Metallkomponente 3 als einstückig grenzflächenfreie Einheit mit der endlosfaserverstärkten Metallzone 7 ausgeformt wird, während die Kunststoffmatrix 6 über weitere Angussöffnungen 11 im Formwerkzeug 9 injiziert wird. Im Übrigen ist die Herstellungs- und Funktionsweise des Faserverbundbauteils 1 nach Fig. 3 weitgehend die gleiche wie bei den zuvor beschriebenen Ausführungsbeispielen.

Ähnlich in Herstellung und Aufbau ist das in Fig. 4 gezeigte, wiederum unter Verwendung gleicher Bezugszeichen gekennzeichnete Faserverbundbauteil, bei welchem als Metallkomponenten endseitige Verbindungselemente 12.1 und 12.2 vorgesehen sind, die einstückig mit der metallischen Matrixzone 7 der ansonsten kunststoffgetränkten Faserstruktur vergossen sind. Im Übrigen entspricht die Herstellungsweise des Faserverbundbauteils nach Fig. 4 im Wesentlichen derjenigen des zuvor beschriebenen Ausführungsbeispiels.

Zur Begrenzung der Metallmatrix 7 auf den Anbindungsbereich der Metallkomponenten 3, 4, 8, 12 können die Kunststoffmatrix 6 und die Metallmatrix 7 jeweils nacheinander anstatt in einem einzigen selbstverständlich auch in getrennten Formwerkzeugen mit entsprechend unterschiedlich angeordneten Matrix-Füllzonen in den Endlosfaserlagenaufbau injiziert werden.

## Patentansprüche

1. Faserverbundbauteil mit einer in einer Kunststoffmatrix eingebetteten, hitzebeständigen, insbesondere aus Carbonfasem bestehenden Faserstruktur und zumindest einer mit dem Faserverbundmaterial integral verbundenen Metallkomponente, **dadurch gekennzeichnet, dass** die Faserstruktur örtlich zumindest im Bereich der Metallkomponente (3; 4.1, 4.2; 8; 12) anstatt mit der Kunststoffmatrix (6) mit einer unter Einbeziehung der Metallkomponente erstarrenden Metallmatrix (7) getränkt ist.

2. Faserverbundbauteil nach Anspruch 1, **dadurch gekennzeichnet, dass** das Faserverbundbauteil (1) über die Metallkomponente (3) mit einem Anbauteil (2, 4.1, 4.2) verlötet oder verschweißt ist.

3. Faserverbundbauteil nach Anspruch 1 oder 2, **dadurch gekennzeichnet, dass**
die Metallkomponente (3; 8) getrennt vorgefertigt und beim Erstarren der Metallmatrix (7) stoffschlüssig mit dieser verbunden ist (Fig. 1, 2).

4. Faserverbundbauteil nach Anspruch 1 oder 2, **dadurch gekennzeichnet, dass**
die Metallkomponente (3; 12)) als einstückig an die und gleichzeitig mit der metallischen Matrixzone (7) vergossenes Verbindungselement ausgebildet ist (Fig. 3, 4).

5. Faserverbundbauteil nach einem der vorhergehenden Ansprüche, **dadurch gekennzeichnet, dass**
die Metallmatrix (7) aus einem sich mit dem Fasermaterial chemisch verbindenden Flüssiglot besteht.

6. Faserverbundbauteil nach Anspruch 3, **dadurch gekennzeichnet, dass** die Metallmatrix (7) aus einem sich einerseits mit dem Fasermaterial und andrerseits mit der vorgefertigten Metallkomponente chemisch verbindenden Flüssiglot besteht.

7. Faserverbundbauteil nach Anspruch 5 oder 6, **dadurch gekennzeichnet, dass**
die Metallmatrix (7) ein kupfer- oder silberbasiertes Flüssiglot ist.

## Claims

1. A composite fibre component comprising a heat-resistant structure comprising especially carbon fibres and embedded in a plastics material matrix, also comprising at least one metal component integrally connected to the composite fibre material, **characterised in that**
the fibre structure, at least in the region of the metal component (3; 4.1, 4.2; 8; 12) is locally impregnated not with the plastics material matrix (6) but with a metal matrix (7) which on solidification includes the metal component.

2. A composite fibre component according to claim 1, **characterised in that** the composite fibre component (1) is welded or soldered to a mounting component (2, 4.1, 4.2) via the metal component (3).

3. A composite fibre component according to claim 1 or claim 2,
**characterised in that**
the metal component (3; 8) is prefabricated separately and connected via the material to the metal matrix (7) on solidifying (Figs. 1, 2).

4. A composite fibre component according to claim 1 or 2, **characterised in that**
the metal component (3; 12) is a connecting element cast integrally on and simultaneously with the metal matrix zone (7) (Figs. 3, 4).

5. A composite fibre component according to any of the preceding claims, **characterised in that**
the metal matrix (7) comprises a liquid solder which chemically combines with the fibre material.

6. A composite fibre component according to claim 3, **characterised in that**
the metal matrix (7) comprises a liquid solder which chemically combines with the fibre material and also with the prefabricated metal component.

7. A composite fibre component according to claim 5 or claim 6,
**characterised in that**
the metal matrix (7) is a copper or silver-based liquid solder.

## Revendications

1. Pièce composite en fibres avec une structure fibreuse incorporée dans une matrice de matériau synthétique réfractaire en particulier en fibres de carbone et au moins un composant métallique étant intégralement relié au matériau composite en fibres,
**caractérisée en ce que**
la structure fibreuse est localement, au moins dans la zone du composant métallique (3 ; 4.1, 4.2 ; 8 ; 12), imprégnée d'une matrice métallique (7) qui se solidifie en intégrant des composants métalliques à la place de la matrice en matériau synthétique (6).

2. Pièce composite en fibres selon la revendication 1,
**caractérisée en ce qu'**
elle est brasée ou soudée par l'intermédiaire des composants métalliques (3) avec une pièce voisine de réception (2, 4.1, 4.2).

3. Pièce composite en fibres selon la revendication 1 ou 2,
**caractérisée en ce que**
les composants métalliques (3 ; 8) sont préfabriqué et reliés par une liaison par la matière avec la matrice métallique (7) lorsque celle-ci se solidifie (figures 1, 2).

4. Pièce composite en fibres selon la revendication 1 ou 2,
**caractérisée en ce que**
les composants métalliques (3 ; 12) sont réalisés en une seule pièce avec les éléments de liaison coulés en même temps avec la zone de matrice métallique (7) (figures 3, 4).

5. Pièce composite en fibres selon les revendications précédentes,
**caractérisée en ce que**
la matrice métallique (7) se compose d'une soudure liquide chimiquement reliée à la matière en fibres.

6. Pièce composite en fibres selon la revendication 3,
**caractérisée en ce que**
la matrice métallique (7) se compose d'une soudure liquide reliée chimiquement d'une part avec le matériau en fibres et d'autre part avec les composants métalliques préfabriqués.

7. Pièce composite en fibres selon la revendication 5 ou 6,
**caractérisée en ce que**
la matrice métallique est une soudure liquide à base de cuivre ou d'argent.
